# EUROPEAN PATENT APPLICATION

(11) **EP 3 141 463 A1**
(43) Date of publication of application: **15.03.2017**
(21) Application number: 16188129.7
(22) Date of filing: 09.09.2016
(51) Int. Cl.: B62H 5/20, E05B 45/00

(54) **ANTI-THEFT DEVICE PARTICULARLY BUT NOT EXCLUSIVELY FOR TWO-WHEEL VEHICLES**

(30) Priority: 11.09.2015 IT UB20153548
(71) Applicant: Nais, Massimo, 35125 Padova (IT)
(72) Inventor: Nais, Massimo, 35125 Padova (IT)
(74) Representative: Modiano, Micaela Nadia

(57) **Abstract**

An anti-theft device particularly but not exclusively for two-wheel vehicles (10), characterized in that it comprises a box-like body (11) for containing an electronic unit (12), for emitting and receiving radio frequency signals, and for a corresponding battery (13), a conducting strap (14) being present which conducts either light or electric current and signals removal and extends from a first connection (15) of the electronic unit (12) to an opposite second connection (16) of the same electronic unit; the conducting strap (14) is arranged so as to exit from a first opening (17) of the box-like body (11) at the first connection (15) and enter a second opening (18) of the box-like body (11) at the second connection (16), defining an annular fixing contour.

## Description

The present invention relates to an anti-theft device, particularly but not exclusively for two-wheel vehicles.

Currently, thanks to the increasing popularity of the bicycle as a means for moving within cities reached with public transport vehicles such as trains or buses, the need is increasingly felt to have bicycle parking facilities that are secure and easy to access in the vicinity of the stations of such public transport vehicles.

The currently best-known protected bicycle parking facilities are constituted
- by staffed bicycle parking stations, intended to contain up to one hundred or more bicycles,
- by a series of so-called "bike-boxes", i.e., individual booths with such dimensions as to be able to accommodate a single bicycle and closed by a door with a key that is intended to remain with the user for the period during which his/her bike is stored therein.

Bike-boxes are used in situations requiring protection against thefts and vandalisms, but the local requirement is not felt strongly enough to allow the building of a staffed bicycle parking station, for example proximate to the railroad stations of villages or towns with a small number of inhabitants.

Such types of parking facility for bicycles, although widespread, each suffer specific drawbacks.

In the case of staffed bicycle stations, the monitoring offered by specifically assigned personnel is generally appreciated by users, who have someone to ask in case of problems and perceive a higher level of security; however, this monitoring entails a cost in terms of personnel and staff organization and staffing is usually ensured only at limited times; the absence of monitoring personnel during night hours causes a lack of security, which the operator may attempt to obviate only by closing the accesses of the parking facility when the monitoring staff is absent, an event which would limit the use of the depot away from peak hours.

Moreover, such bicycle parking stations are created to protect against theft of the entire bicycle, but if there is no monitoring then bicycle parts, such as the saddle, wheels or handlebar, which are easy to carry and conceal, may be stolen.

In the case of bike-boxes, a first drawback is the fact that their space occupation is not utilized efficiently, since bike-boxes remain empty for part of the time, when the bicycle of the user who has rented the bike-box is not inside such bike-box, and this space remains empty and unusable by other users.

A second drawback is the fact that individual bike-boxes are per se bulky and occupy much more space than a corresponding bicycle stall of an outdoor parking space of a bicycle parking station; this also entails that a series of bike-boxes is more difficult to insert physically and aesthetically in a public space.

The aim of the present invention is to provide an anti-theft device particularly but not exclusively for two-wheel vehicles that is capable of obviating the cited limitations of the background art.

Within this aim, an object of the invention is to provide an anti-theft device that allows to set up a parking facility for bicycles that is secure and accessible by the owners of the stored bicycles at all times of day and night.

Another object of the invention is to provide an anti-theft device that allows optimum monitoring even in the absence of personnel.

Another object of the invention is to provide an anti-theft device that can be dedicated also to the individual main components of a two-wheel vehicle.

Another object of the invention is to provide an anti-theft device that allows to customize the access to the parking facility like a bike-box.

Another object of the invention is to provide an anti-theft device that can be set up on existing bicycles and at existing bicycle parking facilities.

Another object of the invention is to provide an anti-theft device that can be applied also to other objects, different from a bicycle and provided with a portion to which such anti-theft device can be fixed.

This aim, as well as these and other objects that will become better apparent hereinafter, are achieved by an anti-theft device particularly but not exclusively for two-wheel vehicles, characterized in that it comprises a box-like body for containing an electronic unit for emitting and receiving radio frequency signals and a corresponding battery, a conducting strap being provided which signals removal and extends from a first connection of said electronic unit to an opposite second connection of the same electronic unit, said conducting strap being arranged so as to exit from a first opening of said box-like body at said first connection and enter a second opening of said box-like body at said second connection, defining an annular fixing contour.

Further characteristics and advantages of the invention will become better apparent from the description of a preferred but not exclusive embodiment of the anti-theft device according to the invention, illustrated by way of nonlimiting example in the accompanying drawings, wherein:
Figure 1 is a partially exploded perspective view of an anti-theft device according to the invention;
Figure 2 is a schematic view of an application of the anti-theft device according to the invention;
Figure 3 is a perspective view of the anti-theft device according to the invention in a first configuration for use;
Figure 4 is a perspective view of the anti-theft device according to the invention in a second configuration for use;
Figure 5 is a perspective view of a variant embodiment of the anti-theft device according to the invention.

With reference to the figures, an anti-theft device for two-wheel vehicles according to the invention is designated generally by the reference numeral 10.

The anti-theft device 10 comprises a box-like containment body 11 for an electronic unit 12 for emitting and receiving radio frequency signals and a corresponding battery 13.

The electronic unit 12 comprises for example a microprocessor, which is to be understood as being of a per se known type.

The anti-theft device 10 comprises a conducting strap 14, which indicates removal and extends from a first connection 15 of the electronic unit 12 to an opposite second connection 16 of the electronic unit 12.

The conducting strap 14 is arranged so as to exit from a first opening 17 of the box-like body 11 at the first connection 15 and enter a second opening 18 of the box-like body 11 at the second connection 16.

The conducting strap 14 is preset to surround a part of a two-wheel vehicle in order to fix the anti-theft device 10 to such vehicle.

The electronic unit 12 for emitting and receiving radio frequency signals comprises an active RFID tag 19, which is adapted to transmit and receive variable-range radio frequency signals toward and from a controller, which is not shown for the sake of simplicity and is to be understood as being arranged proximate to the bicycle, and therefore for example set up within a bicycle parking facility or within adapted parking facilities where the assigned bicycle holders interact with the electronic unit 12.

The anti-theft device 10 is to be understood as being applicable also to control the position and/or presence of a generic item to which the anti-theft device 10 can be fixed, within a space that is controlled by a corresponding controller.

The controller is preset to emit one or more alarm signals if a bicycle provided with an anti-theft device 10 is moved away from the parking facility and therefore from such controller without the signal emitted by the RFID tag 20 having been appropriately deactivated beforehand by a preset user or, for example, by the owner of the bicycle.

The conducting strap 14 is constituted for example by a band or cable or cord or other similar and equivalent element with a fiber-optic core.

As an alternative, the conducting strap 14 is constituted for example by a band or cable or cord or other similar and equivalent material with a core made of conducting and/or resistive material.

The conducting strap 14 is flexible and has such a length that it can be turned around a portion of a frame of a bicycle or otherwise fixed to another part of a two-wheel vehicle.

It should be understood that the anti-theft device 10 according to the invention in practice can be applied also to other items of property, whose position with respect to a controller one wishes to monitor.

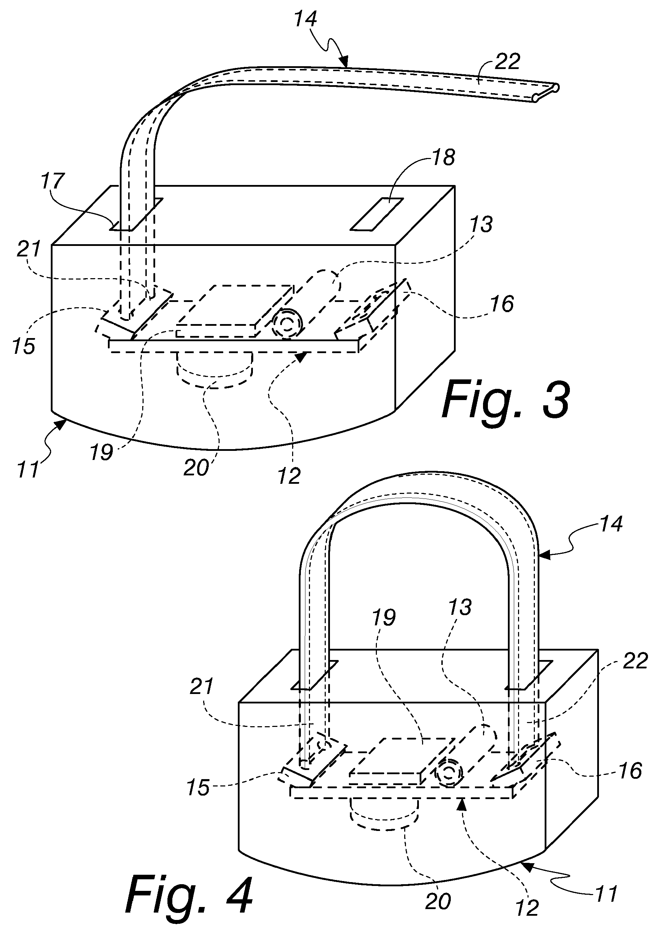

During use, the conducting strap 14 is connected by a first end 21 to the first connection 15 of the electronic unit 12, as exemplified in Figure 3, the joint being provided by welding or by means of screws or rivets or resistive glues or with a snap-coupling system, or other similar and equivalent means, obviously depending on whether the conducting strap 14 contains optical fibers or conducting and/or resistive material.

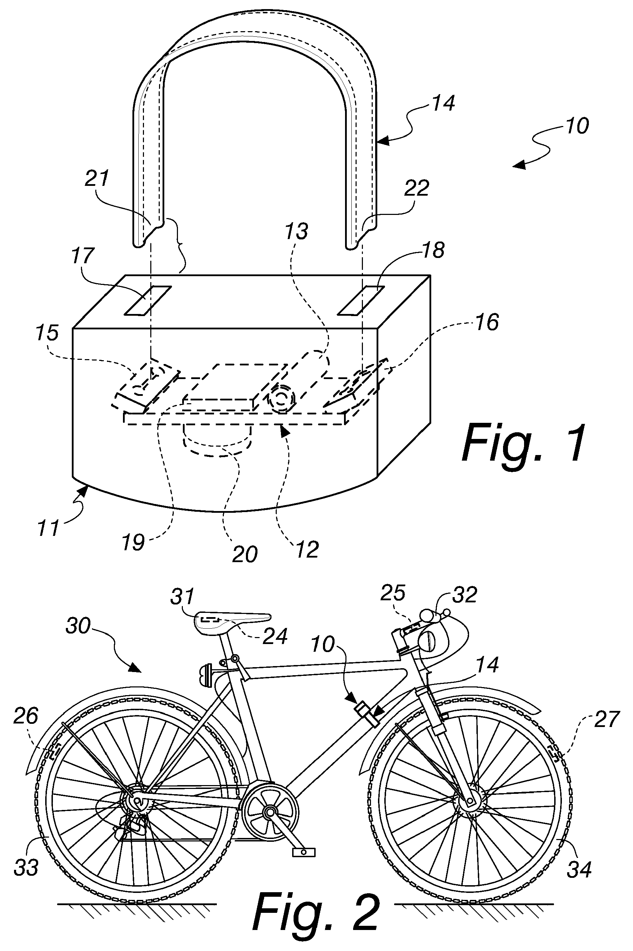

The activation of the anti-theft device 10 is provided by manipulating the conducting strap 14 so as to arrange it so as to surround a tubular portion, as shown in Figure 2, or another portion having another shape, of a bicycle, and then inserting the second end 22 of the conducting strap 14 in the second opening 18 on the box-like body 11, connecting it to the second connection 16 of the electronic unit 12.

In this case also, the joint between the second connection 16 and the second end 22 of the conducting strap 14 is determined by welding or by means of screws or rivets or resistive glues or with a snap-coupling system or other similar and equivalent means, obviously depending on whether the conducting strap 14 contains optical fibers or conductive material and/or resistive material.

In this manner, a circuit is closed which activates the RFID tag 19.

It should be understood that such conducting strap can also be provided as a rigid C-shaped body, which can be arranged equivalently to surround a portion of a frame of a bicycle and provide an electrical connection to the electronic unit 12 that is inside the box-like body 11.

The first connection 15 and the second connection 16 are each constituted for example by a conducting pad that is defined on the printed circuit of the electronic unit 12, to which the corresponding first or second end of the conducting strap 14 is to be connected by way of means and systems as described above.

One of the two ends of the conducting strap 14 can, as an alternative, be connected directly to the battery 13, for example of the button type.

The anti-theft device 10 can be removed and reactivated by an authorized person who owns a master card that stores the code related to that anti-theft device stored beforehand.

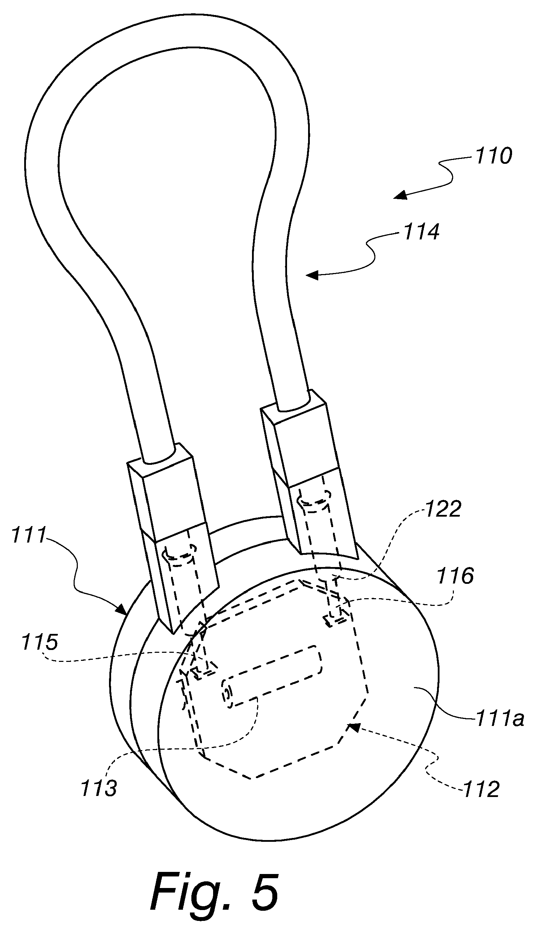

In a constructive variation of the anti-theft device, designated by the reference numeral 110 in Figure 5, it comprises a box-like containment body 111 for an electronic unit 112 for emitting and receiving radio frequency signals and a corresponding battery 131.

The electronic unit 112 comprises for example a microprocessor, which is to be understood as being of a per se known type.

The anti-theft device 110 comprises a conducting strap 114, which indicates removal and extends from a first connection 115 of the electronic unit 112 to an opposite second connection 116 of the electronic unit 112; the first connection 115 comprises an LED which emits luminous signals that are intended to travel along the optical fiber inside the strap 114 up to a receiver LED located at the second connection 116.

In this variation, the fixing of the end 122 to the corresponding connection 116 is stabilized by using a corresponding cover 111a, which in turn is fixed by means of screws, or adapted interlocking conducting inserts or hooks.

In order to activate the operation of the tag of the anti-theft device according to the invention, it is necessary to activate the previously stored radio frequency signal by entering the activation code on the adapted keypad on board the tag reading head, enabling it for operation; by way of example of the use of the anti-theft device according to the invention, the enabled tag may have been previously associated with a card-size tag (owner tag) and only the simultaneous detection of the two tags allows the transit of a person with a bicycle or other item of property through the adapted controlled passages.

The electronic unit 12 comprises an acoustic warning device 20 for indicating attempts to tamper with the conducting strap 14.

The electronic unit 12 comprises a system for measuring and reading the light transmitted by means of the optical fibers or the impedance or the resistance of the conducting material of the conducting strap 14; in this manner, if the conducting strap 14 is cut or removed, the acoustic warning device 20 is activated and the radio frequency emitted by the tag is turned off, so that the controller also releases the preset alarm signals.

The system for measuring and reading the light or impedance or resistance allows to detect any fraudulent connections to the conducting strap 14, such as for example an optical or electrical "bridge" connection, which might be provided in order to prevent the anti-theft device 10 from detecting the cutting of such conducting strap in order to release the bicycle from it.

With this invention, the removal or tampering of the electronic unit 12 with the tag 19 is detected by the microcircuit itself, which can send information or data when it is proximate to a controller, or can turn off, or modify the code of the radio frequency identification signal, and can activate the acoustic warning device which also is arranged, as mentioned, on the electronic unit 12.

The tag 19 is of the active RFID type and is therefore capable of both transmitting and receiving radio frequency signals.

If the anti-theft device is applied to the frame of a bicycle, the main function is to activate in order to communicate/receive data with one or more circuits and/or controllers for detection and control, which in turn are organized to emit one or more different alarm signals, such as for example an acoustic signal locally and the sending of a telephone message to the user who is associated with the bicycle provided with the anti-theft device 10 that is activated.

The anti-theft device 10 according to the invention can also comprise a plurality of passive RFID tags, for example 24, 25, 26 and 27 in Figure 2.

Such passive RFID tags can be arranged, preferably in a non-visible manner, in a corresponding component of the bicycle 30, such as for example a saddle 31, a knob 32 of the handlebar, or in the carcass of the tires 33 and 34.

Such passive RFID tags, which are to be understood as being of a per se known type, can be detected directly by the controllers located for example at anti-theft passages of a bicycle parking facility or can be detected by the active RFID tag 19 itself of the electronic unit 12, which in turn communicates with a controller.

Therefore, if the bicycle is parked proximate to a controller, for example in a parking facility with an anti-theft passage, the anti-theft device 10 is capable of indicating both the movement of the bicycle to which it is fixed and the removal of one or more of its components that contain a passive RFID tag.

The present invention provides an anti-theft device 10 that can be programmed with a code that corresponds to the code of a tag card of the owner, so that the owner himself can remove the bicycle from the anti-theft parking facility without alarm signals being emitted.

The anti-theft device 10 according to the invention is based substantially on the use of an active RFID tag 19 that is capable of transmitting signals or codes of the radio frequency type and can be installed by a user by means of a strap or conducting cord which defines a tampering detection system, adapted to prevent the removal of the anti-theft device 10 without the emission of a tampering signal; such tampering signaling system causes the removal of the anti-theft device 10 to be signaled and optionally the execution of an intervention to modify or delete the transmission codes, so that the controller acts as in the case of a removal of the bicycle for theft or does not allow passage through controlled passages such as for example booths, turnstiles, gates and the like.

In practice it has been found that the invention achieves the intended aim and objects.

In particular, the invention provides an anti-theft device that allows to set up a parking facility for bicycles that is secure and can be accessed by the owners of the stored bicycles at all times of day and night, since the controller that establishes a relationship with the anti-theft device of the parked bicycle is continuously operational.

Moreover, the invention has provided an anti-theft device that allows optimum monitoring and control even remotely and in the absence of on-site personnel.

Furthermore, the invention provides an anti-theft device which can be dedicated also to the individual main components of a two-wheel vehicle, with the passive RFID tags associable with wheels, saddle and handlebar.

Moreover, the invention provides an anti-theft device that allows to customize access to the parking facility like a bike-box.

Furthermore, the invention provides an anti-theft device that can be installed on existing bicycles and at existing bicycle parking facilities.

Moreover, the invention provides an anti-theft device that allows to also control loading and unloading from a truck or other transportation vehicle of items provided with the same anti-theft device.

The anti-theft device 10, therefore, can be installed easily on bicycles, motorcycles, vehicles in general and items that can be stolen easily, and can be installed easily by way of the system for coupling one end of the conducting strap in the corresponding opening of the box-like body, wherein the other end is already connected to the electronic unit.

Furthermore, it can be customized according to the identity of the user and is not removable without deactivating it/powering it off.

The invention thus conceived is susceptible of numerous modifications and variations, all of which are within the scope of the appended claims; all the details may further be replaced with other technically equivalent elements.

In practice, the components and materials used, so long as they are compatible with the specific use, as well as the contingent shapes and dimensions, may be any according to requirements and to the state of the art.

The disclosures in Italian Patent Application No. 102015000050646 (UB2015A003548) from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An anti-theft device (10) particularly but not exclusively for two-wheel vehicles, **characterized in that** it comprises a box-like body (11) for containing an electronic unit (12), for emitting and receiving radio frequency signals, and a corresponding battery (13), a conducting strap (14) being provided which conducts either light or electric current and signals removal and extends from a first connection (15) of said electronic unit (12) to an opposite second connection (16) of the same electronic unit, said conducting strap (14) being arranged so as to exit from a first opening (17) of said box-like body (11) at said first connection (15) and enter a second opening (18) of said box-like body (11) at said second connection (16), defining an annular fixing contour.

2. The anti-theft device according to claim 1, **characterized in that** said electronic unit (12) for emitting and receiving radio frequency signals comprises an active RFID tag (19), adapted to transmit and receive variable-range radio frequency signals.

3. The anti-theft device according to one or more of the preceding claims, **characterized in that** said conducting strap (14) is constituted by a band, or a cable, or a cord, or another similar and equivalent element, with a fiber-optic core.

4. The anti-theft device according to one or more of the preceding claims, **characterized in that** said conducting strap (14) is constituted by a band, or a cable, or a cord, or another similar and equivalent element, with a core made of conducting material.

5. The anti-theft device according to one or more of the preceding claims, **characterized in that** said first connection (15) and said second connection (16) are constituted by a conducting pad defined on the printed circuit of the electronic unit (12), to which the corresponding first end (21) or second end (22) of the conducting strap (14) is to be connected by welding, or by means of screws, or rivets, or resistive glues or with a snap-coupling system, or other similar and equivalent means, obviously depending on whether said conducting strap (14) contains optical fibers or conducting and/or resistive material.

6. The anti-theft device according to one or more of the preceding claims, **characterized in that** said electronic unit (12) comprises a system for measuring and reading the passage of light in a conducting strap (14) with fiber-optic core, or the impedance or resistance of the conducting material of said conducting strap (14) with a core made of conducting material.

7. The anti-theft device according to one or more of the preceding claims, **characterized in that** said electronic unit (12) comprises an acoustic warning device (20) for signaling attempts to tamper with the conducting device (14).

8. The anti-theft device according to one or more of the preceding claims, **characterized in that** it comprises a plurality of passive RFID tags (24, 25, 26, 27) arranged in a corresponding component of the bicycle (30).
